Europäisches Patentamt

European Patent Office

Office européen des brevets

(11) Veröffentlichungsnummer: **0 369 165**
**A1**

## EUROPÄISCHE PATENTANMELDUNG

(21) Anmeldenummer: 89118942.5

(22) Anmeldetag: 12.10.89

(51) Int. Cl.5: **C09J 109/00, C09J 11/06**

(30) Priorität: 20.10.88 DE 3835740

(43) Veröffentlichungstag der Anmeldung:
23.05.90 Patentblatt 90/21

(84) Benannte Vertragsstaaten:
**AT BE DE ES FR GB IT NL SE**

(71) Anmelder: **Henkel Kommanditgesellschaft auf Aktien**
**Henkelstrasse 67**
**D-4000 Düsseldorf 13(DE)**

(72) Erfinder: **Hofmann, Peter**
**Tönisstrasse 37**
**D-4000 Düsseldorf(DE)**
Erfinder: **Bücken, Hans-Jürgen**
**Heideweg 48**
**D-4019 Monheim(DE)**
Erfinder: **Herold, Julius, Dr.**
**28200 Gettysburg**
**Farmington Hills Michigan 48331(US)**

(54) **Heissvulkanisierbare Klebemittel und ihre Verwendung in Verfahren zum flächigen Verbinden von Festkörpern.**

(57) Beschrieben werden heißvulkanisierbare Klebemittel zum flächigen Verbinden von Festkörpern, enthaltend Polybutadien bzw. Polybutadiengemische und/oder Copolymere des Butadiens mit Olefinen und/oder Diolefinen sowie gegebenenfalls weitere vulkanisierbare Polymerkomponenten. Die Klebemittel sind dadurch gekennzeichnet, daß sie mindestens 0,5 Gew.-% - bezogen auf die vulkanisierbaren Polymere -Metallsalze aus der Gruppe der Sikkative für trocknende Öle als Härtungkatalysator enthalten. Die Klebemittel können insbesondere im Fahrzeugbau eingesetzt werden und bilden unter Arbeitsbedingungen innerhalb von weniger als 5 h eine schützende Haut, die ihnen eine Wäscherbeständigkeit verleiht.

EP 0 369 165 A1

## Heißvulkanisierbare Klebemittel und ihre Verwendung in Verfahren zum flächigen Verbinden von Festkörpern

Die Erfindung betrifft heißvulkanisierbare Klebemittel zum flächigen Verbinden von Festkörpern, enthaltend Polybutadien bzw. Polybutadiengemische und/oder Copolymere des Butadiens mit Olefinen und/oder Diolefinen sowie gegebenenfalls weitere vulkanisierbare Polymerkomponenten. Die Erfindung betrifft weiterhin die Verwendung der heißvulkanisierbaren Klebemittel in Verfahren zum flächigen Verbinden von Festkörpern, insbesondere Stahlblechen für den Fahrzeugbau.

Die Verklebung von Stahlblechteilen im Fahrzeugbau, insbesondere bei Karosserien von Automobilen, wird häufig an Rohblechteilen vorgenommen. Die Aushärtung der hierbei eingesetzten Klebstoffe erfolgt später in den Lacktrockenöfen. Vorher durchlaufen die verklebten Werkstücke Reinigungs-, Phosphatier- und Tauchgrundierungsstufen.

Durch die in diesen Stufen verwendeten Agentien können die Klebemittel aus den Klebefugen gespült werden. Zur Vermeidung dieser Erscheinung sind verschiedene Maßnahmen bekanntgeworden, z.B. eine thermisch-induktive Vorhärtung der Klebemittel, die Verwendung der Klebemittel in Form von lösemittelhaltigen Rezepturen, als Zweikomponentenprodukte oder in Band- oder Rundschnurform. Die vorstehend genannten Maßnahmen weisen spezifische Nachteile auf oder erfordern die Installation spezieller Geräte.

Aus der EP-A 0 097 394 sind heißvulkanisierbare Klebemittel auf Polybutadienbasis bekannt, die neben Polybutadienen bzw. Polybutadiengemischen Schwefel, Füllstoffe, wasserbindende Mittel, insbesondere CaO, Vulkanisationshilfsmittel und Vulkanisationsbeschleuniger enthalten. Besonders diese Klebemittel sind bei den oben erwähnten Stufen der Reinigung sowie der Phosphatierung und Tauchgrundierung wenig resistent und werden auf den Klebefugen herausgespült.

Die Erfindung ist auf verbesserte heißvulkanisierbare Klebemittel auf Polybutadienbasis der vorstehend genannten Art gerichtet, die in üblichen, in der Industrie vorhandenen Auftragsgeräten verarbeitet werden können und durch einen Gehalt an speziellen Härtungskatalysatoren nach dem Auftragen unter üblichen Arbeitsbedingungen in kurzer Zeit ohne durchzuhärten eine Haut bilden, die die Klebemittel vor dem Einfluß der Reinigungs-, Phosphatierungs- und Tauchgrundierungsmittel schützt.

Diese Aufgabe wird erfindungsgemäß durch heißvulkanisierbare Klebemittel gelöst, die mindestens 0,5 Gew.-% - bezogen auf die vulkanisierbaren Polymere - Metallsalze aus der Gruppe der Sikkative für trocknende Öle als Härtungskatalysator enthalten, welche nach Art und Menge so gewählt sind, daß sich in Gegenwart von Luftsauerstoff auf der Klebemitteloberfläche bei Raumtemperatur innerhalb von weniger als 5 h eine Haut ausbildet.

Die Klebemittel der Erfindung eignen sich zum Verbinden von Festkörpern aus Metall, insbesondere Stahl, Glas, Keramik und dergleichen, wobei auch Verbundstoffe aus gleichen oder verschiedenen Materialien hergestellt werden können.

Die erfindungsgemäß enthaltenen Metallsalze sind als solche als Sikkative für trocknende Öle bekannt; vgl. Ullmann, Encyclopedia of Industrial Chemistry, 5th Ed., Vol. A9, (1987) S. 63/64 sowie 4. deutsche Auflage, Bd. 23, (1984), S. 421-424, Verlag Chemie Weinheim. Darunter fallen insbesondere die öllöslichen Metallsalze organischer Säuren. Der Säureteil dieser Metallsalze kann z.B. von Mono- oder Polycarbonsäuren gebildet sein. Bevorzugt im Sinne der Erfindung sind die Salze der Monocarbonsäuren, insbesondere der Naphthensäuren und/oder der Isooctansäuren. Gemäß einer vorteilhaften Ausführungsform der Erfindung enthält der Härtungskatalysator Metallsalze mit Cobalt, Blei, Zink, Mangan, Cer und/oder Zirkonium als Metallkationen. Da bei der Sikkativierung von trocknenden Ölen eine im Rahmen der Erfindung angestrebte Hautbildung unerwünscht ist, wurden diese Metallsalze gemäß dem genannten Stand der Technik in sehr geringen Konzentrationen, meist in Verbindung mit Mitteln zur Verhinderung der Hautbildung, eingesetzt.

Die erfindungsgemäß einzuhaltende Obergrenze für die Menge der zuzusetzenden Härtungskatalysatoren kann durch den Fachmann problemlos ermittelt werden und beträgt vorzugsweise bis zu 10 Gew.-%, da sich die Geschwindigkeit der Hautbildung auf der Oberfläche der einzusetzenden Klebemittel durch weitere Zugabe an Katalysator nicht oder nur noch unwesentlich vergrößern läßt.

Der nach der Applikation des Klebemittels zur Hautbildung benötigte Sauerstoff ist üblicherweise in der das Werkstück umgebenden Luft enthalten. Die Umgebungstemperatur, der das Werkstück nach dem Klebemittelauftrag bis zur Hautbildung ausgesetzt ist, entspricht i.a. der Raumtemperatur z.B. in der Montagehalle und liegt etwa zwischen 15 °C und 35 °C. Die erfindungsgemäße Hautbildung findet also vorteilhafterweise unter üblichen Arbeitsbedingungen statt.

Im Rahmen der Erfindung werden unter Polybutadien zunächst die verschiedenen strukturisomeren Homopolymeren des 1,3-Butadiens verstanden. Die Homopolymeren des Butadiens können in zwei strukturisomeren Formen vorliegen, nämlich als 1,4-Polybutadien sowie als 1,2-Polybutadien. 1,4-Polybutadiene sind linear und unverzweigt und enthalten in der Hauptkette Doppelbindungen, die cis- oder trans-konfiguriert sein können. Die 1,2-Polybutadiene enthalten Seitengruppen mit einer vinylischen Doppelbindung.

Als Basis für die erfindungsgemäße Klebemittel sind sämtliche der vorgenannten Polybutadienisomeren geeignet. Gemäß einer bevorzugten Ausführungsform der Erfindung sind 1,4-Polybutadiene enthalten, insbesondere solche, die mindestens 70% cis-konfigurierte Doppelbindungen aufweisen. Besonders geeignet sind weiterhin derartige Polybutadiene mit 80 oder sogar 98% cis-konfigurierten Doppelbindungen. Die vorgenannten Polybutadiene sind im Handel erhältlich. Es ist bekannt, daß cis-1,4-Polybutadiene sehr gute Härtungseigenschaften aufweisen, so daß diese Materialien besonders bevorzugt sind, wenn eine schnelle Hautbildung erwünscht ist.

Weiterhin können im Rahmen der Erfindung auch 1,4-Polybutadiene eingesetzt werden, die mehr als 50% trans-ständige Doppelbindungen aufweisen, z.B. Produkte mit 60 bis 98% trans-ständigen Doppelbindungen. Weiterhin einsetzbar sind Poly-1,2-butadiene, d.h. Materialien mit vinylischen Doppelbindungen. Als sehr gut geeignetes Ausgangsmaterial sind dabei Produkte mit 20 bis 99% seitenständigen Doppelbindungen, z.B. Produkte mit mehr als 40, mehr als 80 oder auch mehr als 90% an diesen Doppelbindungen, anzusehen.

In der Mehrzahl der Fälle werden für die Klebemittel der Erfindung Isomerengemische von Polybutadienen - sogenannte Polybutadiengemische - eingesetzt, z.B. 1,4-Polybutadiene mit 20 bis 70% cis-ständigen Doppelbindungen und/oder 20 bis 50% trans-ständigen Doppelbindungen, die daneben noch 0 bis 3%, 3 bis 30% oder mehr seitenständige vinylische Doppelbindungen aufweisen können. Bezüglich der Herstellbarkeit von Polybutadienen mit unterschiedlicher Konfiguration gilt das allgemeine Fachwissen der Polymerchemie, z.B. H. G. Elias, "Makromoleküle", 4. Aufl., Hüthig & Wepf Verlag, Basel, Heidelberg, New York, S.676 (Konfigurationsänderung "cis" zu "trans") sowie S.744-746 und 1012ff.

Gemäß einer besonders vorteilhaften Ausführungsform der Erfindung enthält mindestens eines der das Polybutadiengemisch bildenden Polybutadiene wenigstens 70% cis-konfigurierte Doppelbindungen, wobei sein Anteil in dem Polybutadiengemisch nicht weniger als 50 Gew.% beträgt.

Gemäß einer weiteren vorteilhaften Ausführungsform der Erfindung setzt man Polybutadiene bzw. Polybutadiengemische ein, deren Zahlenmittel der Molmassen im Bereich von 1000 bis 10.000 liegen.

Für die heißvulkanisierbaren Klebemittel der Erfindung können auch Copolymere des Butadiens mit Olefinen und/oder Diolefinen, z.B. mit Styrol oder Acrylnitril, anstelle der Polybutadiene oder im Gemisch mit diesen eingesetzt werden; bevorzugt sind Butadiencopolymere mit einem Butadiengehalt von mindestens 40, insbesondere mindestens 60 Gew.-%. Die Klebemittel der Erfindung können weiterhin zusätzliche vulkanisierbare Bestandteile enthalten, z.B. Polychlorbutadien, Polyisopren, EPDM-Kautschuk, Butylkautschuk, Acrylatkautschuk sowie Chlorbutyl- und Brombutylkautschuk. Diese weiteren vulkanisierbaren Bestandteile sind vorzugsweise gegenüber den Polybutadiengemischen in untergeordneten Mengen enthalten.

Gemäß einer weiteren vorteilhaften Ausführungsform der Erfindung enthalten die heißvulkanisierbaren Klebemittel der Erfindung Schwefel und/oder schwefelhaltige Vulkanisiermittel. Eine Definition für schwefelhaltige Vulkanisiermittel findet sich in Ullmann, Enzyklopädie der Technischen Chemie, 4.Aufl., Band 13, S.639-640, Verlag Chemie Weinheim (1977); auf den Inhalt dieser Veröffentlichung wird ausdrücklich Bezug genommen. Typische Beispiele für schwefelhaltige Vulkanisiermittel, d.h. sogenannte Schwefelspender, sind Dimorpholyldisulfid, 2-Morpholinodithiobenzothiazol, Caprolactamdisulfid und Dipentamethylenthiuramtetrasulfid, weiterhin auch sogenannte Thioplaste.

Gemäß einer weiteren vorteilhaften Ausführungsform der Erfindung enthalten die heißvulkanisierbaren Klebemittel Vulkanisationsbeschleuniger und Vulkanisationshilfsmittel. Diese sind dem Fachmann auf dem Gebiet der Vulkanisation von Kautschuk geläufig, vgl. Ullmann, loc. cit., S. 639 - 644; Entsprechendes gilt für Alterungs-und Ermüdungsschutzmittel, vgl. S. 644 - 650.

Ein besonders bevorzugtes Vulkanisationshilfsmittel im Rahmen der Erfindung ist Zinkoxid. Vorteilhafte Vulkanisationsbeschleuniger sind z.B. 2-Mercaptobenzothiazol, Dibenzothiazyldisulfid, Zinksalze des 2-Mercaptobenzothiazols, Benzothiazyl-2-cyclohexylsulfenamid, Benzothiazyl-2-tert.-butylsulfenamid, Benzothiazyl-2-sulfenmorpholid, Benzothiazyl-dicyclohexylsulfenamid, Diphenylguanidin, Di-ortho-tolylguanidin, ortho-Tolylbiguanid, Tetramethylthiuramidsulfid, Tetramethylthiuram-monosulfid, Zink-N-dimethyldithiocarbamat, Zink-N-diäthyldithiocarbamat, Zink-N-dibutyldithiocarbamat, Zink-N-äthylphenyldithiocarbamat, Zink-N-pentamethylendithiocarbamat, Äthylenthioharnstoff, Diäthylthioharnstoff und Diphenylthioharnstoff.

Gemäß einer weiteren vorteilhaften Ausführungsform der Erfindung enthalten die heißvulkanisierbaren Klebemittel Füllstoffe, die dem Kautschukfachmann geläufig sind, z.B. Calciumcarbonat, Talkum, pyrogene Kieselsäure und Ruß. Zu den einsetzbaren Füllstoffen gehören auch Pigmente mit Füllstoffcharakter. Weitere geeignete Füllstoffe sind dem genannten Band 13 des Ullmann, 4. Auflage, S.650-654 zu

EP 0 369 165 A1

entnehmen.

Gemäß einer weiteren vorteilhaften Ausführungsform der Erfindung enthalten die heißvulkanisierbaren Klebemittel wasserbindende Mittel, durch die verhindert wird, daß durch gegebenenfalls vorhandenes Wasser sich in den aushärtenden Klebemitteln Poren bilden; ein besonders vorteilhaftes wasserbindendes Mittel für das Klebemittel der Erfindung ist Calciumoxid.

Die Klebemittel der Erfindung können weiterhin für Vulkanisationsmassen übliche Additive wie Alterungs- und Ermüdungsschutzmittel enthalten, die z.B. in dem genannten Band 13 des Ullmann, 4. Auflage, S.644-650, näher erläutert sind.

Gemäß einer weiteren vorteilhaften Ausführungsform der Erfindung weisen die vulkanisierbaren Klebemittel die folgende Zusammensetzung auf:

a) 20 bis 50 Gew.-Teile Polybutadien bzw. Polybutadiengemische,
b) 1 bis 8 Gew.-Teile Schwefel und/oder schwefelhaltige Vulkanisiermittel,
c) 30 bis 70 Gew.-Teile Füllstoffe,
d) 1 bis 10 Gew.-Teile wasserbindende Mittel,
e) 2 bis 8 Gew.-Teile Vulkanisationshilfsmittel,
f) 1 bis 6 Gew.-Teile Vulkanisationsbeschleuniger,
g) 0,5 bis 10 Gew.-% - bezogen auf die vulkanisierbaren Bestandteile - Metallsalze als Härtungskatalysator, sowie gegebenenfalls
h) übliche Zusätze wie Alterungsschutzmittel und/oder Ermüdungsschutzmittel.

Besonders bevorzugt sind heißvulkanisierbare Klebemittel der Erfindung mit der folgenden Zusammensetzung:

a) 20 bis 50 Gew.-Teile Polybutadien bzw. Polybutadiengemische,
b) 4 bis 6 Gew.-Teile Schwefel,
c) 40 bis 60 Gew.-Teile Füllstoffe aus der von Calciumcarbonat, Talkum und Ruß gebildeten Gruppe,
d) 3 bis 8 Gew.-Teile Calciumoxid als wasserbindendes Mittel,
e) 3 bis 5 Gew.-Teile Zinkoxid als Vulkanisationshilfsmittel,
f) 2 bis 5 Gew.-Teile Vulkanisationsbeschleuniger,
g) 0,5 bis 10 Gew.-% - bezogen auf die vulkanisierbaren Bestandteile - Metallsalze als Härtungskatalysator
sowie gegebenenfalls
h) übliche Zusätze wie Alterungsschutzmittel und/oder Ermüdungsschutzmittel.

Die Erfindung betrifft weiterhin Verfahren zum flächigen Verbinden von Festkörpern, insbesondere von Stahlblechen für den Fahrzeugbau, durch Auftragen eines Klebemittels auf die Oberfläche mindestens eines Festkörpers, Zusammenfügen der zu verbindenden Oberflächen und Härtung des Klebemittels durch Hitzeeinwirkung unter Verwendung eines heißvulkanisierbaren Klebemittels, welches Polybutadien bzw. Polybutadiengemische und/oder Copolymere des Butadiens mit Olefinen und/oder Diolefinen sowie gegebenenfalls weitere vulkanisierbare Bestandteile und mindestens 0,5 Gew.-% - bezogen auf die vulkanisierbaren Bestandteile - Metallsalze aus der Gruppe der Sikkative für trocknende Öle als Härtungskatalysator enthält, welcher nach Art und Menge so gewählt ist, daß sich in Gegenwart von Luftsauerstoff auf der Klebemitteloberfläche innerhalb von weniger als 5 h eine Haut ausbildet. Besonders vorteilhaft ist ein Verfahren, bei dem die zu verbindenden Festkörper, die gegebenenfalls an ihrer Oberfläche Verunreinigungen, insbesondere Fette bzw. Öle, aufweisen, nach dem Auftrag des Klebemittels, dem Zusammenfügen und der Ausbildung einer Haut auf der Klebemitteloberfläche gereinigt, photophatiert und/oder tauchgrundiert werden und unter Hitzeeinwirkung die Härtung des Klebemittels gewünschtenfalls zusammen mit einer Einbrennlackierung erfolgt.

Beispiele

Die Erfindung wird im folgenden anhand von bevorzugten Ausführungsbeispielen näher erläutert.

Beispiele 1 bis 4.

In einem 500 kg fassenden, handelsüblichen Planetenmischwerk wurden innerhalb einer Stunde die in der Tabelle 1 aufgeführten Bestandteile vermischt.

Die Tabelle 1 enthält auch eine Rezeptur für einen Vergleichsversuch sowie die für alle Rezepturen

4

ermittelten Hautbildungszeiten in Stunden sowie Zugscherfestigkeiten.

Als "Hautbildungszeit" wurde diejenige Zeit (in Stunden) angenommen, nach der sich bei Raumtemperatur in Gegenwart von Luftsauerstoff eine Haut gebildet hatte, die eine Beständigkeit des aufgetragenen Klebemittels gegen Wasch-, Phosphatier- und Tauchgrundeinflüsse (kurz: "Wäscherfestigkeit") ergab. Die Wäscherfestigkeit muß innerhalb von 2 bis 5 Stunden gegeben sein. Dies entspricht der Zeit zwischen dem Auftragen der Klebemittel auf das Werkstück bis zum Eintreten der Wäscherfestigkeit. Produkte ohne die erfindungsgemäß enthaltenen Sikkative bildeten zwar, wie sich aus dem Vergleichsversuch ergibt, nach wesentlich längerer Zeit (mehr als 72 Stunden) eine Haut, die jedoch sehr dünn bleibt. Ein Schutz des Klebemittels ist dadurch nicht gegeben.

Die Wäscherfestigkeit wurde durch Aufspritzen von heißem Wasser auf und/oder zwischen aufgetragene Klebstoffraupen nach folgender Testmethode ermittelt:

Auf ein geöltes Stahlblech von 300 x 300 mm wurden zwei Klebstoffraupen (250 x 30 x 2 mm) in einem Abstand von 50 mm zueinander aufgetragen. Nach vorgeschriebener Lagerzeit bei Raumtemperatur wurde die Probe in waagerechter Lage einem Wasserstrahl von 50°C ± 5°C bei einem Druck von 68 kN/m² über eine Düse Nr. 1/2 GG-25 Full Jet der Firma Spraying System Co. ausgesetzt. Der Abstand zwischen Probe und Düse betrug 250 mm. Der Wasserstrahl wurde eine Minute lang zwischen die Raupen gerichtet. Es wurde anschließend der Grad der Deformation oder Verschiebung der Klebstoffraupe beurteilt und gravimetrisch die Menge an abgekühltem Klebstoff ermittelt. Bei den angegebenen Hautbildungszeiten ergab sich keine Verschiebung der Klebstoffraupen bzw. kein Klebstoffverlust.

Die Zugscherfestigkeit wurde DIN 53 283 nach einer Aushärtungszeit von 30 min bei 180°C in 2 bzw. 0,3 mm Schichtdicke im Umluftofen gemessen.

Aus Tabelle 1 ergibt sich, daß die Klebemittel der Erfindung nach 3,5 bzw. 2 Stunden die angestrebte stabilisierende Haut gebildet hatten. Das Klebemittel gemäß der Vergleichsrezeptur bildete erst nach mehr als 72 Stunden eine sehr dünne Haut, die jedoch keine Wäscherfestigkeit ergab.

Tabelle 1

| | Beispiele | | | | Vergleich |
|---|---|---|---|---|---|
| | 1 | 2 | 3 | 4 | |
| PB 80 % 1,4-cis, MM 3000 | 270 | 320 | - | - | - |
| PB 75 % 1,4-cis, MM 1500 | - | - | 290 | 160 | 310 |
| PB 40-50 % Vinyl-1,2, MM 1800 | 50 | - | - | 120 | - |
| PB 98 % 1,4-cis, Mooney-Visk. 48 | - | - | 20 | 10 | - |
| Calciumcarbonat | 240 | 240 | 255 | 305 | 235 |
| Talkum | 255 | 255 | 260 | 200 | 255 |
| Calciumoxid | 50 | 50 | 50 | 50 | 50 |
| Zinkoxid | 40 | 40 | 40 | 40 | 40 |
| Schwefel | 40 | 40 | 40 | 60 | 50 |
| Dibenzothiazyldisulfid | 50 | 50 | 30 | 30 | 60 |
| Co-naphthenat (mit ca. 12 % Co) — Härtungskatalysator nach DIN 55910 | 5 | 5 | - | - | - |
| Blei-octoat (mit 38-40 % Pb) | - | - | 10 | 15 | - |
| Co-octoat (mit 12 % Co) | - | - | 5 | 10 | - |
| Hautbildungszeit h | 3,5 | 3,5 | 2 | 2 | > 72* |
| Zugscherfestigkeit MPa (DIN 53283) nach Aushärtung 30' in 180°C in 2 mm Schichtdicke | 1,7 | 1,4 | - | - | 1,4 |
| in 0,3 mm Schichtdicke | - | - | 1,6 | 2,0 | - |

(PB = Polybutadien, MM = Zahlenmittel der Molmassen)

* sehr dünne Haut ohne tiefergehende Durchtrocknung

## Ansprüche

1. Heißvulkanisierbare Klebemittel zum flächigen Verbinden von Festkörpern, enthaltend Polybutadien bzw. Polybutadiengemische und/oder Copolymere des Butadiens mit Olefinen und/oder Diolefinen sowie gegebenenfalls weitere vulkanisierbare Polymerkomponenten dadurch gekennzeichnet, daß mindestens 0,5 Gew.-% bezogen auf die vulkanisierbaren Polymere - an Metallsalzen aus der Gruppe der Sikkative für trocknende Öle als Härtungskatalysator darin enthalten sind, welche nach Art und Menge so gewählt sind, daß sich in Gegenwart von Luftsauerstoff auf der Klebemitteloberfläche bei Raumtemperatur innerhalb von weniger als 5 h eine Haut ausbildet.

2. Heißvulkanisierbare Klebemittel nach Anspruch 1, dadurch gekennzeichnet, daß sie bis zu 10 Gew.-% Härtungskatalysator bezogen auf die vulkanisierbaren Polymere, enthalten.

13. Heißvulkanisierbare Klebemittel nach Ansprüchen 1 und 2, dadurch gekennzeichnet, daß sie als Härtungskatalysator Metallsalze mit Cobalt, Blei, Zink, Mangan, Cer und/oder Zirkonium als Metall-Kationen enthalten.

4. Heißvulkanisierbare Klebemittel nach Ansprüchen 1 bis 3, dadurch gekennzeichnet, daß sie als Härtungskatalysator öllösliche Metallsalze organischer Säuren, vorzugsweise der Monocarbonsäuren, insbesondere der Naphtensäuren und/oder der Isooktansäuren, enthalten.

5. Heißvulkanisierbare Klebemittel nach Ansprüchen 1 bis 4, dadurch gekennzeichnet, daß sie 1,4-Polybutadiene mit mindestens 70% cis-konfigurierten Doppelbindungen enthalten.

6. Heißvulkanisierbare Klebemittel nach Ansprüchen 1 bis 5, dadurch gekennzeichnet, daß mindestens eines der das Polybutadiengemisch bildenden Polybutadiene wenigstens 70% cis-konfigurierte Doppelbindungen enthält und sein Anteil in dem Polybutadiengemisch nicht weniger als 50 Gew.-% beträgt.

7. Heißvulkanisierbare Klebemittel nach Ansprüchen 1 bis 6, dadurch gekennzeichnet, daß die Polybutadiene Zahlenmittel der Molmassen im Bereich von 1000 bis 10.000 aufweisen.

8. Heißvulkanisierbare Klebemittel nach Ansprüchen 1 bis 7, dadurch gekennzeichnet, daß die Copolymere des Butadiens mit Olefinen und/oder Diolefinen einen Butadiengehalt von mindestens 40, insbesondere mindestens 60 Gew.-% aufweisen.

9. Heißvulkanisierbare Klebemittel nach Ansprüchen 1 bis 8, dadurch gekennzeichnet, daß sie Vulkanisationsbeschleuniger, Vulkanisationshilfsmittel, Füllstoffe, wasserbindende Mittel, Schwefel und/oder schwefelhaltige Vulkanisiermittel enthalten.

10. Heißvulkanisierbare Klebemittel nach Ansprüchen 1 bis 9, dadurch gekennzeichnet, daß sie für Vulkanisationsmassen übliche Zusätze wie Alterungs- und/oder Ermüdungsschutzmittel enthalten.

11. Heißvulkanisierbare Klebemittel nach Ansprüchen 1 bis 10, dadurch gekennzeichnet, daß sie
a) 20 bis 50 Gew.-Teile Polybutadien bzw. Polybutadiengemische
b) 1 bis 8 Gew.-Teile Schwefel und/oder schwefelhaltige Vulkanisiermittel,
c) 30 bis 70 Gew.-Teile Füllstoffe,
d) 1 bis 10 Gew.-Teile wasserbindende Mittel,
e) 2 bis 8 Gew.-Teile Vulkanisationshilfsmittel,
f) 1 bis 6 Gew.-Teile Vulkanisationsbeschleuniger,
g) 0,5 bis 10 Gew.-% - bezogen auf die vulkanisierbaren Polymere - Metallsalze als Härtungskatalysator
sowie gegebenenfalls
h) übliche Zusätze wie Alterungsschutzmittel und/oder Ermüdungsschutzmittel
enthalten.

12. Heißvulkanisierbare Klebemittel nach Ansprüchen 1 bis 10, dadurch gekennzeichnet, daß sie
a) 20 bis 50 Gew.-Teile Polybutadien bzw. Polybutadiengemische
b) 4 bis 6 Gew.-Teile Schwefel,
c) 40 bis 60 Gew.-Teile Füllstoffe aus der von Calciumcarbonat, Talkum, pyrogener Kieselsäure und Ruß gebildeten Gruppe,
d) 3 bis 8 Gew.-Teile Calciumoxid als wasserbindendes Mittel,
e) 3 bis 5 Gew.-Teile Zinkoxid als Vulkanisationshilfsmittel,
f) 2 bis 5 Gew.-Teile Vulkanisationsbeschleuniger,
g) 0,5 bis 10 Gew.-% - bezogen auf die vulkanisierbaren Polymere - Metallsalze als Härtungskatalysator
sowie gegebenenfalls
h) übliche Zusätze wie Alterungsschutzmittel und/oder Ermüdungsschutzmittel
enthalten.

13. Verfahren zum flächigen Verbinden von Festkörpern, insbesondere von Stahlblechen für den Fahrzeugbau, durch Auftragen eines Klebemittels auf die Oberfläche mindestens eines Festkörpers, Zusammenfügen der zu verbindenden Festkörper und Härtung des Klebemittels durch Hitzeeinwirkung, dadurch gekennzeichnet, daß heißvulkanisierbare Klebemittel eingesetzt werden, welche Polybutadien bzw. Polybutadiengemische und/oder Copolymere des Butadiens mit Olefinen und/oder Diolefinen sowie gegebenenfalls weitere vulkanisierbare Polymerkomponenten und mindestens 0,5 Gew.-% - bezogen auf die vulkanisierbaren Polymere - Metallsalze aus der Gruppe der Sikkative für trocknende Öle als Härtungskatalysator enthalten, welche nach Art und Menge so gewählt sind, daß sich in Gegenwart von Luftsauerstoff auf der Klebemitteloberfläche bei Raumtemperatur innerhalb von weniger als 5 h eine Haut ausbildet.

14. Verfahren nach Anspruch 12, dadurch gekennzeichnet, daß die zu verbindenden Festkörper, die gegebenenfalls an ihrer Oberfläche Verunreinigungen insbesondere Fette bzw. Öle aufweisen, nach dem Auftrag des Klebemittels, dem Zusammenfügen und der Ausbildung einer Haut auf der Klebemitteloberfläche gereinigt, phosphatiert und/oder tauchgrundiert werden und anschließend unter Hitzeeinwirkung die Härtung des Klebemittels gewünschtenfalls zusammen mit einer Einbrennlackierung erfolgt.

Europäisches
Patentamt

**EUROPÄISCHER RECHERCHENBERICHT**

Nummer der Anmeldung

EP 89 11 8942

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DATABASE JAPIO (HOST:ORBIT), 1985, ref.no. 85-112 873, & JP-A-60 112 873 (Y. TANIMOTO et al.), 19-06-1985 * Whole abstract * --- | 1-4,8, 10,13 | C 09 J 109/00 C 09 J 11/06 |
| D,Y | EP-A-0 097 394 (EVODE LTD) * Anspruch 1; Beispiele * --- | 1-14 | |
| Y | GB-A- 579 238 (R.B.F.F. CLARK) * Ansprüche 1,3; Seite 2, Zeilen 19-34 * --- | 1-14 | |
| A | EP-A-0 256 316 (HENKEL) * Anspruch 1 * --- | | |
| A | EP-A-0 067 488 (AKZO) * Anspruch 1 * ----- | | |

RECHERCHIERTE
SACHGEBIETE (Int. Cl.5)

C 08 K
C 09 J

Der vorliegende Recherchenbericht wurde für alle Patentansprüche erstellt

| Recherchenort | Abschlußdatum der Recherche | Prüfer |
|---|---|---|
| DEN HAAG | 05-02-1990 | VAN HUMBEECK F.W.C. |